(19) Europäisches Patentamt

**European Patent Office**

**Office européen des brevets**

(11) Veröffentlichungsnummer: **0 203 520 B1**

(12) **EUROPÄISCHE PATENTSCHRIFT**

(45) Veröffentlichungstag der Patentschrift: **29.01.92**

(21) Anmeldenummer: **86106938.3**

(22) Anmeldetag: **22.05.86**

(51) Int. Cl.⁵: **F24F 1/02**, F24F 6/00, A61N 5/06

(54) **Heilklimagerät.**

(30) Priorität: **22.05.85 DE 3518456**

(43) Veröffentlichungstag der Anmeldung:
**03.12.86 Patentblatt 86/49**

(45) Bekanntmachung des Hinweises auf die
Patenterteilung:
**29.01.92 Patentblatt 92/05**

(84) Benannte Vertragsstaaten:
**AT BE CH DE FR GB IT LI LU NL SE**

(56) Entgegenhaltungen:
**CH-A- 622 086**
**DD-A- 210 960**
**DE-A- 1 924 179**
**DE-A- 2 111 595**
**DE-A- 3 406 831**

(73) Patentinhaber: **Schuwerk, Fritz**
**Jutastrasse 26**
**W-8000 München 2(DE)**

Patentinhaber: **Schuwerk, Paula**
**Jutastrasse 26**
**W-8000 München 2(DE)**

(72) Erfinder: **Schuwerk, Fritz**
**Jutastrasse 26**
**W-8000 München 2(DE)**

(74) Vertreter: **Franke, Karl Wilhelm, Dr.**
**Steinsdorfstrasse 10**
**W-8000 München 22(DE)**

Rank Xerox (UK) Business Services

**Beschreibung**

Die Erfindung ist allgemein mit der Beeinflussung der Raumluft in gesundheitsförderndem bis therapeutischem Sinne befaßt, und sie betrifft im besonderen ein Heilklimagerät zur Raumluftbehandlung, wie es im Oberbegriff des Patentanspruchs 1 im einzelnen angegeben ist.

Dabei soll unter Raumluft nicht ausschließlich die Luft in einem geschlossenen Raum verstanden werden, sondern allgemeiner die jeweilige Atmosphäre in der Umgebung von Personen, die einer sie kräftigenden oder auch heilenden Behandlung zugeführt werden sollen, die von ihrer Umwelt her auf sie einwirkt.

Aus der DE-A-1 924 179, die auf einer früheren Entwicklung des Erfinders beruht, ist bereits ein elektromedizinisches Heilgerät bekannt, das die Verabreichung von Medikamenten über die Atemwege der zu behandelnden Person gestattet. Dabei wird als Träger für die zu verabreichenden Medikamente ein Flüssigkeitsnebel verwendet, der in einem Gehäuse durch Versprühen von Flüssigkeit erzeugt und durch einen Luftstrom aus dem Gehäuse herausgeführt wird, der seinerseits durch ein Gebläse im Gehäuse erzeugt wird und wahlweise erwärmt oder abgekühlt und mit Zusatzgas versetzt werden kann. Mit einem außerdem im Gehäuse angeordneten UV-Strahler kann im Bedarfsfalle UV-C-Strahlung erzeugt werden, die eine Keimabtötung durch Ozon ermöglicht.

Eine derartige Entkeimung mittels durch UV-C-Strahlung erzeugtem Ozon ist auch bei aus der DD-A-210 960 und der DE-A-34 06 831 Geräten zur Raumluftbefeuchtung vorgesehen.

Demgegenüber ist es Aufgabe der vorliegenden Erfindung, ein Heilklimagerät zu schaffen, das in der Lage ist, ein Raumklima zu erzeugen, das den klimatischen Verhältnissen im Bereich der Meeresbrandung voll entspricht, wozu insbesondere auch gehört, daß alle an der Nebelbildung für die Raumklimaerzeugung beteiligten Stoffe dem gesamten im Sonnenlicht enthaltenen UV-Spektrum unter Einschluß von UV-A-, UV-B- und UV-C-Strahlung ausgesetzt werden können.

Die gestellte Aufgabe wird gemäß der Erfindung gelöst durch ein Heilklimagerät, wie es im Patentanspruch 1 im einzelnen angegeben ist; vorteilhafte Ausgestaltungen und Weiterbildungen der Erfindung ergeben sich aus den Unteransprüchen.

In diesem Sinne kann nach durch den Erfinder veranlaßten Untersuchungen davon ausgegangen werden, daß ein Heilklimagerät gemäß der vorliegenden Erfindung außer zu einer allgemeinen Kräftigung und erhöhter Widerstandsfähigkeit der behandelten Personen gegen Infektionen auch zu einer wesentlichen Linderung einer ganzen Reihe von gesundheitlichen Beschwerden zumindest beiträgt. Insbesondere ist ein vorbeugender und auch therapeutischer Einsatz des Geräts bei Atemwegerkrankungen wie Rhinitis, Sinusitis, Tracheitis, Laryngitis, Erkältungen, Pseudokrupp, Pertussis, Bronchitis, Heuschnupfen, Bronchialasthma und allergischer Konjunktivitis, bei Hauterkrankungen wie atopischer Dermatitis, Ekzemen und Psoriasis, bei cardiopulmonaler Insuffizienz, bei Wetterfühligkeit, bei vegetativer Dystonie und bei Appetitmangel möglich und von großem Vorteil.

Im Grundsatz kann ein Heilklimagerät gemäß der Erfindung als eine Art von Gradierwerk angesehen werden, und es entwickelt auch eine in etwa vergleichbare Wirkung. Das im Gehäuse des Geräts in Vorrat gehaltene Meerwasser, bei dem es sich vorzugsweise um Meerestiefwasser aus dem Atlantik (Biomaris) handelt, wird durch die Sprüheinrichtung in konstanter und regelbarer Weise in einen Tropfenvorhang übergeführt, aus dem unter der Einwirkung des durch das im Gehäuse vorgesehene Gebläse erhaltenen Luftstromes ein Aerosol/Luft-Gemisch auf Meerwasserbasis entsteht, dessen an die Raumluft abgegebene Tröpfchen in ihrer Größenverteilung in etwa die Verhältnisse an der Meeresküste im Brandungsbereich nachbilden. Dabei werden insbesondere auch die dort in der Natur herrschenden Strahlungsbedingungen berücksichtigt, und darüber hinaus ist es außerdem möglich, in das erzeugte Raumklima neben den mineralischen Wirkstoffen des Meerwassers noch gezielt bestimmte Heilwirkstoffe auf der Grundlage von Heilkräutern oder ätherischen Ölen einzubringen. Der transportierende Luftstrom kann vollständig von allen störenden Fremdbestandteilen wie Feinstaub, Pollen oder Bakterien befreit zum Einsatz gebracht werden, wodurch sich zusätzlich zu der damit erzielten Reizstoffbefreiung in Verbindung mit der Anreicherung der Luft mit Meersalzmineralien auch eine gesundheitsfördernde Steigerung der Luftionisierung erhalten läßt. Schließlich wirkt sich auch die durch den mit dem Luftstrom mitgeführten Meerwassernebel entstehende Steigerung der Raumluftfeuchtigkeit positiv auf das Befinden der sich in dem erzeugten Raumklima aufhaltenden Personen aus. Dabei kann der Feuchtigkeitsgehalt der an die Umgebung abgegebenen Luft ebenso wie deren Temperatur in jeweils gewünschter Weise eingestellt werden. Sowohl die Menge der an die Umgebung abgegebenen Luft als auch ihr Gehalt an den einzelnen Heilwirkstoffen läßt sich jeweils bedarfsgerecht regeln, wobei insbesondere auch die Zumischung gasförmiger Behandlungsstoffe wie Ozon in jeweils optimaler Menge möglich ist.

Insgesamt gesehen ermöglicht ein Heilklimagerät gemäß der Erfindung die Erzeugung einer für die jeweils betroffenen Personen optimal wirksamen und insbesondere schadstoffreien Umweltatmosphäre.

Für die weitere Erläuterung der Erfindung werden nunmehr anhand der Zeichnung bevorzugte Ausführungsbeispiele für Heilklimageräte näher beschrieben; dabei zeigen in der Zeichnung:

Fig. 1 ein Heilklimagerät gemäß der Erfindung in einem Längsschnitt;

Fig. 2 das Heilklimagerät von Fig. 1 in einer teilweise aufgebrochenen Seitenansicht,

Fig. 3 das Heilklimagerät von Fig. 1 und 2 in einer Stirnansicht,

Fig. 4 ein Blockschaltbild für die elektrische Einrichtung des Heilklimageräts von Fig. 1 bis 3 und

Fig. 5 eine Ausführungsvariante für ein Heilklimagerät gemäß der Erfindung in einem Längsschnitt analog zu Fig. 1.

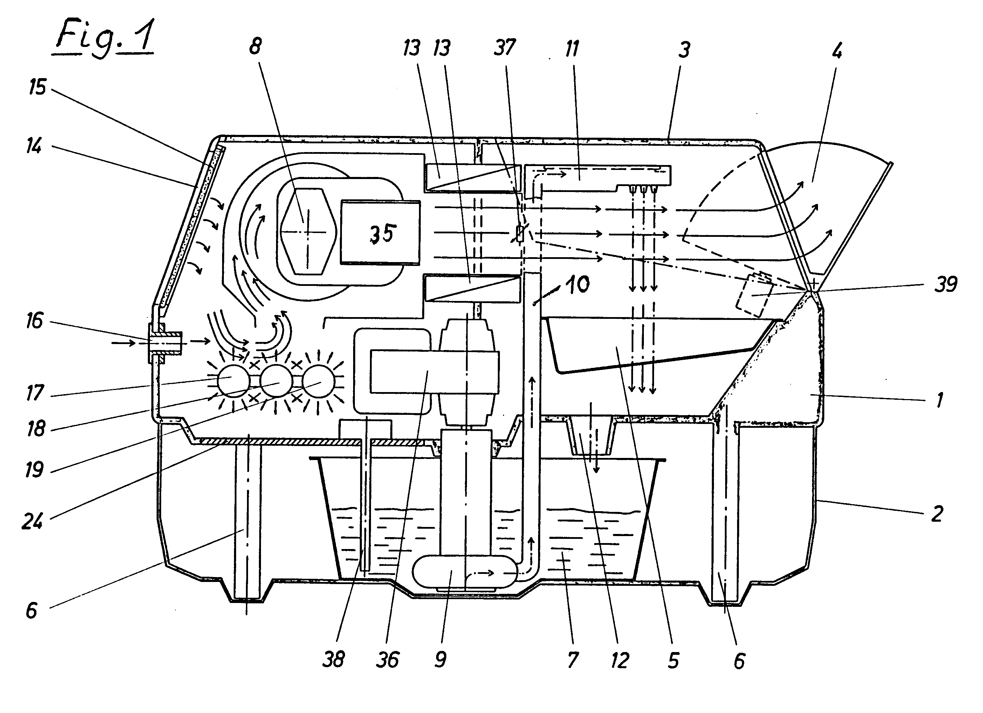

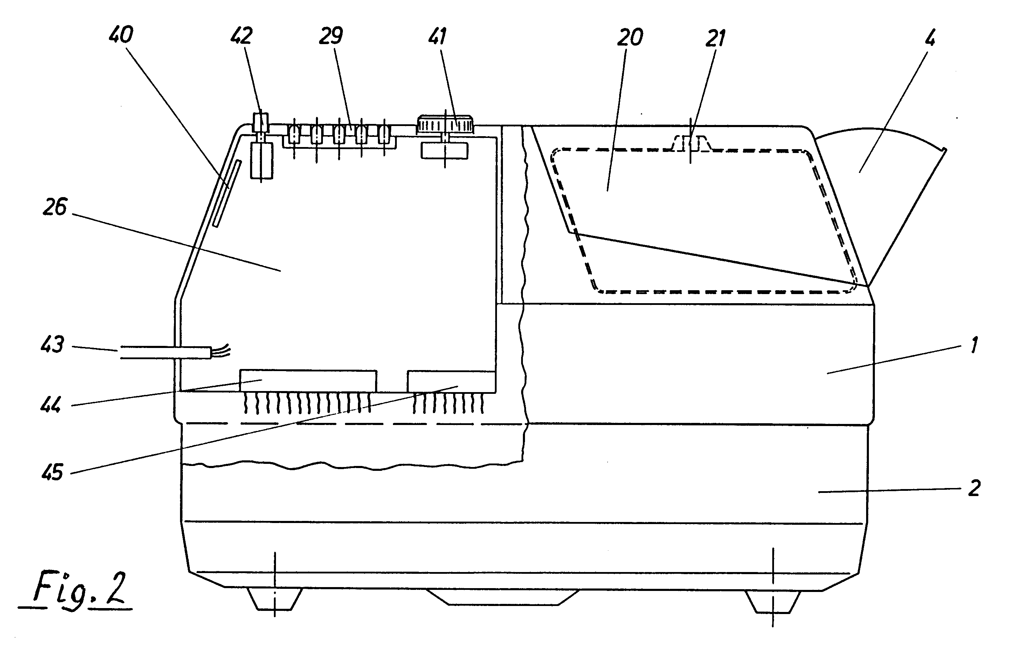

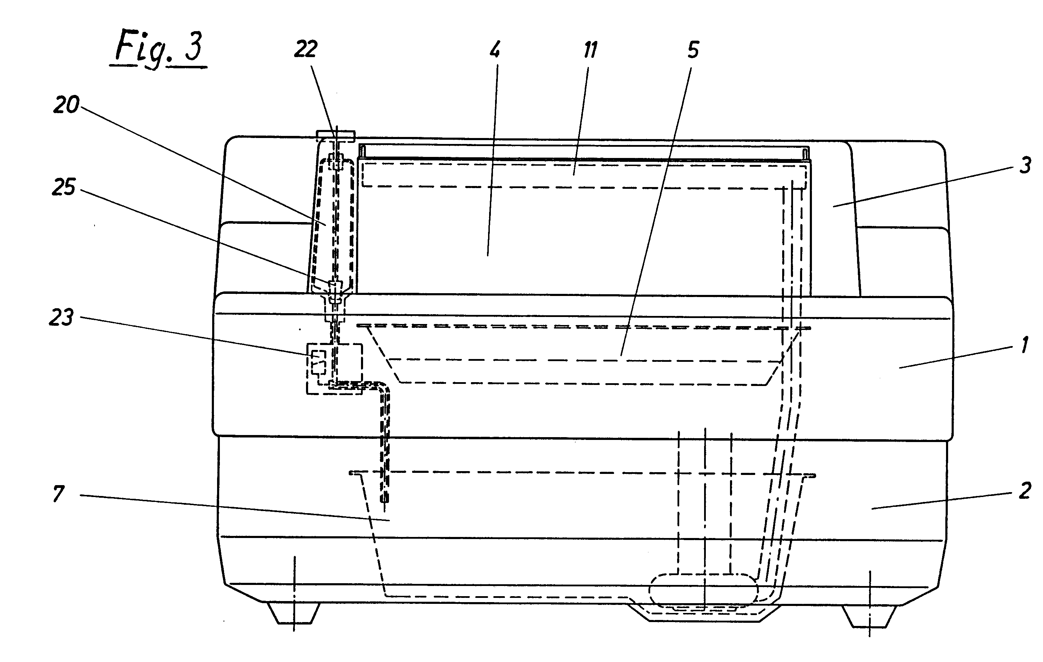

Das in Fig. 1 bis 3 dargestellte Heilklimagerät gemäß der Erfindung besitzt ein Gehäuse, das aus einem als Wanne ausgebildeten Unterteil 2 und einem in Form einer Haube darauf aufgesetzten Oberteil 1 zusammengesetzt ist. Das Oberteil 1 stützt sich auf dem Unterteil 2 über vier Aufstellfüße 6 ab, auf denen es nach dem Abheben vom Unterteil 2 beispielsweise im Rahmen von Nachfüll- oder Reinigungsarbeiten abgestellt werden kann.

Das Unterteil 2 dient im wesentlichen der Aufnahme der zur Bildung des Sprühnebels im Gehäuse verwendeten Flüssigkeit, also vor allem des Meerwassers. Dabei kann das Unterteil 2 insgesamt mit dieser Flüssigkeit gefüllt werden, es ist aber auch möglich, wie bei dem dargestellten Ausführungsbeispiel als gesonderten Behälter eine kleinere Wanne 7 einzusetzen, die in ihrer Form dem Boden des Unterteils 2 angepaßt ist und so sicheren Halt darin findet.

Das Oberteil 1 kann mit dem Unterteil 2 mit Hilfe eines in der Zeichnung nicht eigens dargestellten Schnappverschlusses sicher verbunden werden, und es dient als Träger für alle funktionellen Teile des Heilklimageräts. Von oben her ist das Oberteil 1 über, eine durch eine Abdeckung 3 verschließbare Öffnung zugänglich, die freien Zugriff zu allen Bauteilen in seinem Inneren gestattet. Auf seiner einen Stirnseite enthält das Oberteil 1 als Raumluftzutritt in das Gerät eine Ansaugöffnung 14, hinter der im Betrieb ein Luftfilter 15 angeordnet ist, das auch feinste Schwebeteilchen wie Feinstaub zurückhalten kann. Gleichzeitig kann dieses Luftfilter 15 auch als Sperre für einen Eintritt von Allergie auslösenden Pollen oder Mikroben herangezogen werden, so daß das Heilklimagerät auch die Funktion eines Luftreinigers übernehmen kann. Als Luftaustritt ist auf der der Ansaugöffnung 14 abgewandten Stirnseite des Gehäuses eine um eine horizontale Achse schwenkbare Klappe 4 vorgesehen, deren Aufschwenken über einen Hauptschalter 39 das Heilklimagerät insgesamt einschaltet. Bei geschlossener Klappe 4 ist das Gerät abgeschaltet und zugleich staubdicht abgeschlossen. Den unteren Abschluß des Oberteils 1 als Trennwand gegenüber dem Unterteil 2 bildet eine Platte 24, die zumindest in einem Teilbereich aus für UV-Strahlung durchlässigem Material wie beispielsweise einem entsprechenden Quarzglas besteht und in die für den Rücklauf von überschüssiger Flüssigkeit bei der Sprühnebelbildung zu der Wanne 7 im Unterteil 2 eine trichterförmige Öffnung 12 eingearbeitet ist. Unterhalb der Ansaugöffnung 14 ist am Oberteil 1 noch ein Einlaßstutzen 16 vorgesehen, über den zusätzlich zur Raumluft Zusatzgas wie beispielsweise reiner Sauerstoff in das Heilklimagerät eingeleitet werden kann.

Im unteren Abschnitt des Oberteils 1 ist ein Elektromotor 36 angeordnet, der als Antrieb für eine Pumpe 9 dient, die in die Wanne 7 im Unterteil 2 eintaucht und daraus Flüssigkeit über ein senkrechtes Steigrohr 10 zu einer Düsenplatte 11 im oberen Abschnitt des Oberteils 1 fördert. Die Düsen der Düsenplatte 11 erzeugen aus der ihnen zugeführten Flüssigkeit einen Sprühnebel aus feinst verteilten Tröpfchen, der einen quer zur Luftführungsrichtung verlaufenden Nebelvorhang bildet. Daraus nach unten absinkende Überschußflüssigkeit durchquert auf ihrem Wege zurück zur Wanne 7 im Unterteil 2 vor ihrem Durchtritt durch die trichterförmige Öffnung 12 ein Korbfilter 5, das als Träger für Heilkräuter dienen kann, deren Wirkstoffe dann durch die rücklaufende Flüssigkeit extrahiert und damit in den Flüssigkeitskreislauf im Gerät eingeführt werden. Parallel zu diesem Vorrat an festen zusätzlichen Heilwirkstoffen ist im Oberteil 1 ein Zusatzbehälter 20 für die Aufnahme zusätzlicher Heilwirkstoffe in flüssiger Form vorgesehen, die über eine Einfüllöffnung 21 zugegeben werden können. Die Einführung dieser flüssigen Zusatzstoffe in den Flüssigkeitskreislauf im Heilklimagerät erfolgt über ein Magnetventil 23 für die Freigabe einer Verbindungsleitung vom Zusatzbehälter 20 zur Wanne 7 und ein mit Hilfe einer Dosierschraube 22 einstellbares Dosierventil 25.

Im Anschluß an die Ansaugöffnung 14 als Eintritt für die Raumlauft ist im Oberteil 1 ein als Querstromlüfter ausgebildetes Gebläse 8 angeordnet, für dessen Antrieb ein Elektromotor 35 vorgesehen ist. Der Ansaugkanal dieses Gebläses 8 liegt gleichzeitig auch im Eintrittsbereich des etwa über den Einlaßstutzen 16 zugeführten Zusatzgases. Auf diese Weise erzeugt das Gebläse 8 im Oberteil 1 einen horizontal auf die Klappe 4 als Luftaustritt gerichteten Luftstrom aus durch das Luftfilter 15 gereinigter Raumluft und etwaigem Zusatzgas wie Sauerstoff. Dieser Luftstrom geht zunächst durch eine kombinierte Heiz- und Kühleinrichtung hindurch, die als aktive Elemente Peltierelemente 13 aufweist, die je nach Wunsch eine Temperaturerhöhung oder eine Temperaturerniedrigung für den Luftstrom bewirken können. Die Luftstromtemperatur wird durch einen der Heiz- und Kühleinrichtung nachgeordneten Temperaturfühler 37 erfaßt, und zur Einstellung eines gewünschten Temperatursollwertes ist ein Termperatureinsteller 41 vorgesehen, der von außen verstellt werden kann. Bei der Temperaturregelung findet weiter die Feuchtigkeit der über die Ansaugöffnung 14 eintretenden Raumluft Berücksichtigung, zu deren Erfassung im Bereich der Ansaugöffnung 14 ein Feuchtefühler 40 vorgesehen ist.

Den Flüssigkeitsstand in der Wanne 7 im Unterteil 2 erfaßt ein Pegelfühler 38, der beispielsweise mit Hilfe eines Schwimmers einen oberen und einen unteren Grenzwert für den Flüssigkeitsstand festlegt, oberhalb bzw. unterhalb derer das Heilklimagerät außer Betrieb gesetzt wird.

Im Eintrittsbereich der über die Ansaugöffnung 14 zuströmenden Raumluft und des etwa über den Einlaßstutzen 16 zugeführten Zusatzgases und oberhalb der Wanne 7 im Unterteil 2 ist im Oberteil 1 des Gehäuses eine Bestrahlungseinrichtung angeordnet, die drei räumlich getrennte Strahler 17, 18 und 19 für UV-A-, für UV-B- bzw. für UV-C-Strahlung aufweist. In der elektrischen Stromversorgung sind die Strahler 17 und 18 für UV-A- und für UV-B-Strahlung zusammengeschaltet, während für die Speisung des Strahlers 19 für UV-C-Strahlung ein gesonderter Schalter 42 und für die Anzeige seines Betriebs eine gesonderte Anzeigeleuchte 31 vorgesehen sind. Zumindest im Wirkungsbereich der Bestrahlungseinrichtung ist die Platte 24 für UV-Strahlung durchlässig ausgebildet, so daß diese auch auf die Flüssigkeit in der Wanne 7 im Unterteil 2 zur Einwirkung kommen kann.

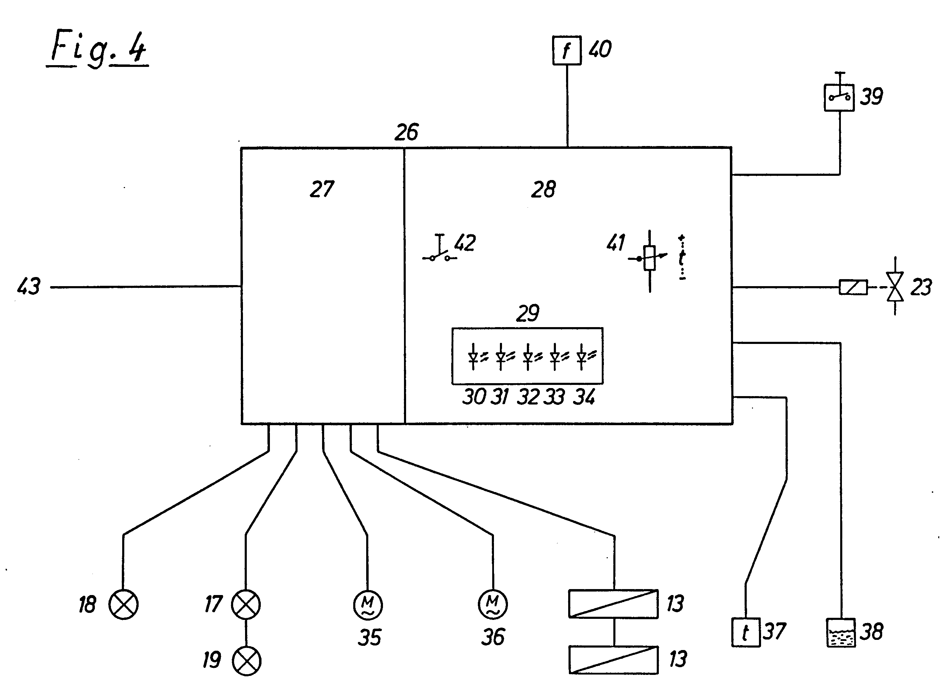

Im elektrischen Aufbau, wie er vor allem aus dem Blockschaltbild von Fig. 4 ersichtlich ist, enthält das dargestellte Heilklimagerät eine elektronische Steuerschaltung 26 mit einem Leistungsteil 27 und einem Regel- und Bedienteil 28. Der Leistungsteil 27 wird über einen Netzanschluß 43 gespeist und übernimmt über einen ersten Anschlußsatz 44 die Speisung der Bestrahlungseinrichtung mit den Strahlern 17, 18 und 19, der Elektromotore 35 und 36 für den Betrieb des Gebläses 8 bzw. der Pumpe 9 und der Heiz- und Kühleinrichtung mit den Peltierelementen 13. Über einen zweiten Anschlußsatz 45 erfolgt die Speisung des Regel- und Bedienteils 28 und der Fühler und Regeleinrichtungen. Der Regel- und Bedienteil 28 enthält außer dem Temperatureinsteller 41 und dem Schalter 42 für den Strahler 19 für UV-C-Strahlung eine Anzeigeeinrichtung 29 mit als Leuchtdioden ausgebildeten Anzeigeleuchten 30 bis 34, von denen die Leuchte 30 der Anzeige des Einschaltzustandes des Heilklimageräts, die Leuchte 31 der Anzeige des Betriebs des Strahlers 19 für UV-C-Strahlung, die Leuchten 32 und 33 der Anzeige der Betriebszustände "Heizen" bzw. "Kühlen" in der Heiz- und Kühleinrichtung und die Leuchte 34 zur Anzeige einer Störung wie eines zu geringen Pegelstandes in der Wanne 7 dienen. An den Regel- und Bedienteil 28 angeschlossen sind weiter der Hauptschalter 39, das Magnetventil 23, der Temperaturfühler 37, der Pegelfühler 38 und der Feuchtefühler 40.

Für die Inbetriebnahme des dargestellten Heilklimageräts wird zunächst bei abgenommenem Oberteil 1 die Wanne 7 im Unterteil 2 mit als Flüssigkeit zur späteren Sprühnebelbildung dienendem Meerwasser gefüllt, bis ein etwa dem oberen Grenzwert ensprechender Pegelstand erreicht ist. Anschließend wird das Oberteil 1 aufgesetzt, wobei der Schnappverschluß für eine feste Verbindung zwischen Oberteil 1 und Unterteil 2 sorgt. Nach dem Einfüllen etwa gewünschter Zusatzflüssigkeit in den Zusatzbehälter 20 im Oberteil 1, der Einbringung etwa gewünschter fester Heilwirkstoffe in das Korbfilter 5 unterhalb der Düsenplatte 11 und dem Anschließen der Netzzuleitung am Netzanschluß 43 und gegebenenfalls einer Zuführungsleitung für etwa gewünschtes Zusatzgas am Einlaßstutzen 16 ist das Heilklimagerät dann betriebsbereit und kann durch Ausschwenken der Klappe 4 unter Betätigung des damit gekoppelten Hauptschalters 39 in Betrieb gesetzt werden.

Nach einer solchen Betätigung des Hauptschalters 39 gehen der Elektromotor 35 für das Gebläse 8, der Elektromotor 36 für die Pumpe 9 und die Bestrahlungseinrichtung mit den Strahlern 17 und 18 sowie gegebenenfalls - je nach der Stellung des Schalters 42 - dem Strahler 19 in Betrieb. Die Pumpe 9 fördert aus der Wanne 7 Meerwasser, dem gewünschtenfalls über das Magnetventil 23 und das Dosierventil 25 flüssige Medikamente oder ätherische Öle als Zusatzflüssigkeit in dosierter Menge zugesetzt werden, über das Steigrohr 10 zur Düsenplatte 11, wo es über deren Düsen zu einem Nebelvorhang versprüht wird. Dieser Nebelvorhang wird von einem Luftstrom durchquert und mitgenommen, den das Gebläse 8 aus der über die Ansaugöffnung 14 und das nachgeschaltete Luftfilter 15 angesaugten Raumluft und gegebenenfalls dem über den Einlaßstutzen 16 zugeführten Zusatzgas wie Sauerstoff erzeugt. Überschußflüssigkeit, die aus dem Nebelvorhang nach unten in das Korbfilter 5 abtropft, löst aus dort etwa in Vorrat gehaltenen Heilkräutern deren Wirkstoffe heraus und bringt sie in gelöster Form in die in der Wanne 7 enthaltene Lösung aus Meerwasser, bevorzugt Meerestiefwasser aus dem Atlantik (Biomaris), und etwaiger Zusatzflüssigkeit ein, von wo aus sie dann ebenfalls zum Versprühen gebracht werden können. Die von der Bestrahlungseinrichtung abgegebene UV-Strahlung gelangt zur Einwirkung sowohl auf die den Luftstrom bildenden Gase als auch auf die in der Wanne 7 enthaltene Flüssigkeit, womit sich die Klimaverhältnisse im Meeresbrandungsbereich vollendet nachbilden lassen.

Der aus dem Heilklimagerät bei geöffneter Klappe 4 austretende Luftstrom ergibt eine Atmosphäre, die einem Meerklima entspricht, wobei dieses noch gezielt durch spezielle Heilwirkstoffe angereichert werden kann, die in fester, in flüssiger oder in gasförmiger Form in das Heilklimagerät eingebracht werden können. Die erhaltene Atmosphäre entspricht auch in ihrem Reinheitsgrad und in ihrer Ionisierung optimal zuträglichen Bedingungen, und sie kann mit Hilfe des Temperaturfühlers 37 und des Feuchtefühlers 40 auf eine gewünschte Temperatur bzw. einen gewünschten Feuchtigkeitsgehalt eingestellt werden, so daß stets dem jeweiligen Anwendungsfall entsprechende Optimalbedingungen geschaffen werden können. Das Heilklimagerät erweist sich im Betrieb als sicher und leicht zu warten und zu bedienen und schafft damit eine einfache und zuverlässige Möglichkeit zur Gewinnung eines gesundheitsfördernden Raumklimas für Vorbeugung und Therapie bei einer Vielzahl von gesundheitlichen Beschwerden.

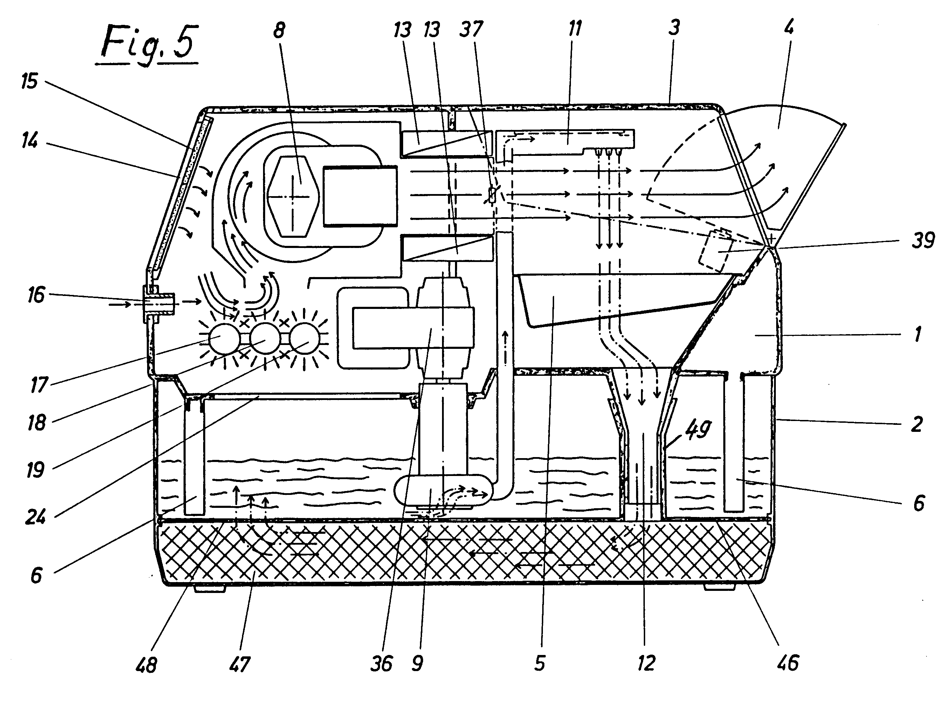

Die in Fig. 5 dargestellte Ausführungsvariante für ein Heilklimagerät gemäß der Erfindung erweist sich als speziell vorteilhaft für einen Einsatz in einer Umgebung, in der die Luft in stärkerem Maße durch Schwebstoffteilchen wie Staub, insbesondere auch radioaktiver Art belastet ist, da das Heilklimagerät gemäß der Erfindung in dieser Ausführung eine besonders intensive Luftwäsche bewirkt.

Im grundsätzlichen Aufbau gleicht das Heilklimagerät nach Fig. 5 dem von Fig. 1, und entsprechende Teile sind in Fig. 5 mit den gleichen Bezugszahlen bezeichnet wie in Fig. 1. Abweichend von der Darstellung in Fig. 1 ist in Fig. 5 anstelle der gesondert eingesetzten Wanne 7 (in Fig. 1) das Unterteil 2 des Gehäuses selbst als Behälter für die Aufnahme des Meerwassers für die Nebelbildung vorgesehen.

Außerdem ist auf dem Boden des Unterteils 2 des Gehäuses ein speziell gestaltetes Filter 47 angeordnet das sich über die gesamte Bodenfläche des Unterteils 2 erstreckt. Dieses Filter 47 liegt dabei unterhalb des Meerwasservorrats und wird von diesem durch eine Abdeckplatte 46 getrennt, die nahe ihrem in der Zeichnung rechten Ende einen in der Verlängerung der trichterförmigen Öffnung 12 für die Rückführung der Überschußflüssigkeit aus dem Nebel liegenden Einlauftrichter 49 trägt und nahe ihrem anderen Ende ein Durchströmgitter 48 aufweist, durch das hindurch die Überschußflüssigkeit nach ihrem Durchgang durch das Filter 47 in den Meerwasservorrat gelangt.

Das Filter 47 selbst besteht aus einem porösen Traggerüst mit einer wirksamen Oberfläche aus einer zusammenhängenden Edelmetallschicht. Dabei ist die Porengröße des Traggerüsts so bemessen, daß auch feine Feststoffteilchen aus der durchströmenden Flüssigkeit herausgefiltert werden. Die Edelmetallschicht, die beispielsweise elektrolytisch auf das Traggerüst aufgebracht werden kann, besteht vorzugsweise aus einem Metall der Platingruppe oder aus Gold oder aus einer Legierung dieser Metalle, und sie bewirkt eine adsorptive Bindung etwa in der das Filter 47 durchströmenden Flüssigkeit mitgeführter radioaktiver Strahler. Zu Reinigungszwecken kann das Filter 47 nach Entfernung der Abdeckplatte 46 aus dem Unterteil 2 herausgenommen werden.

Eine genaue Erklärung des Wirkungsmechanismus kann zwar nicht gegeben werden, die Untersuchungen des Erfinders lassen aber doch erkennen, daß sich mit Hilfe des Filters 47 eine Raumluftreinigung nicht nur ganz allgemein von Staub sondern auch von radioaktiven Strahlern erzielen läßt. Insgesamt führt daher die Ausführungsvariante nach Fig. 5 zu einem Raumklima, das positive Auswirkungen auf die betroffenen Personen nicht nur bei den eingangs erwähnten Erkrankungen ergibt.

**Patentansprüche**

1. Heilklimagerät zur Raumluftbehandlung, bei dem in bzw. an einem Gehäuse mit Luftansaug- und -ausblasöffnungen
   - ein Außenluft ansaugendes Gebläse (8) zum Erzeugen eines Luftstromes,
   - eine Heiz- und Kühleinrichtung zum Einstellen der Temperatur des Luftstromes auf einen gewünschten Wert,
   - wenigstens ein Flüssigkeitsvorrat,
   - eine Vorrichtung (16) zum wahlweisen Einführen von Zusatzgas in den Luftstrom,
   - eine Sprüheinrichtung (11) zum Erzeugen eines den Weg des Luftstromes durch das Gehäuse kreuzenden Nebelvorhangs aus dem Flüssigkeitsvorrat, und
   - eine Bestrahlungseinrichtung zum Erzeugen von auf den Luftstrom einwirkender UV-Strahlung

   angeordnet sind,
   dadurch gekennzeichnet,
   daß wenigstens ein Behälter (7) als Flüssigkeitsvorrat Meerwasser enthält,
   daß die Bestrahlungseinrichtung Strahler (17, 18, 19) zum Erzeugen des vollen UV-Spektrums des Sonnenlichts mit Einschluß von UV-A-, UV-B-und UV-C-Strahlung aufweist und

daß diese Strahler (17, 18, 19) im Gehäuse (1, 2) im Bereich der Eintrittsöffnungen (14, 16) sowohl für die den Luftstrom bildende Raumluft als auch für das diesem gegebenenfalls zumischbare Zusatzgas und oberhalb des Behälters (7) angeordnet sind, so daß die von ihnen erzeugte Strahlung nicht nur auf den Luftstrom, sondern auch auf den Meerwasservorrat zur Einwirkung kommt.

2. Gerät nach Anspruch 1, dadurch gekennzeichnet,
daß die Bestrahlungseinrichtung drei getrennte Strahler (17, 18, 19) für UV-A-, für UV-B- und UV-C-Strahlung aufweist, wobei die Strahler (17, 18) für UV-A- und für UV-B-Strahlung in ihrer Stromversorgung zusammen und getrennt von dem Strahler (19) für UV-C Strahlung geschaltet sind.

3. Gerät nach einem der Ansprüche 1 und 2, dadurch gekennzeichnet,
daß als Meerwasservorrat für die Nebelbildung Meerestiefwasser (Biomaris) vorgesehen ist.

4. Gerät nach einem der Ansprüche 1 bis 3, dadurch gekennzeichnet,
daß der Meerwasservorrat im Gehäuse (1, 2) von dem Bereich der Nebelbildung durch die Sprüheinrichtung (11) durch eine Abdeckung (24) getrennt ist, die zumindest im Bereich der Bestrahlungseinrichtung (17, 18, 19) für UV-Strahlung durchlässig ist.

5. Gerät nach einem der Ansprüche 1 bis 4, dadurch gekennzeichnet,
daß in den Meerwasservorat im Gehäuse (1, 2) an der Bestrahlungseinrichtung (17, 18, 19) abgewandter Stelle ein Einlauf für eine Zugabe von Zusatzflüssigkeit für die Raumluftbehandlung mündet.

6. Gerät nach Anspruch 5, dadurch gekennzeichnet,
daß in der Zuführung für die Zusatzflüssigkeit zum Meerwasservorrat im Gehäuse (1, 2) eine Dosiereinrichtung (22, 25) vorgesehen ist.

7. Gerät nach einem der Ansprüche 1 bis 6, dadurch gekennzeichnet,
daß der Luftstrom im Anschluß an den Wirkungsbereich der Bestrahlungseinrichtung (17, 18, 19) und das Gebläse (8) eine kombinierte Heizund Kühleinrichtung mit Peltierelementen (13) als aktiven Elementen durchquert, auf die der Wirkungsbereich der Sprüheinrichtung (11) folgt.

8. Gerät nach Anspruch 7, dadurch gekennzeichnet,
daß im Wege des Luftstroms im Anschluß an die Heiz- und Kühleinrichtung (13) ein Temperaturfühler (37) mit einem Temperatureinsteller (41) für eine Temperaturregelung auf einen konstanten Wert am Austritt (4) der Luft in die Umgebung vorgesehen ist.

9. Gerät nach einem der Ansprüche 1 bis 8, dadurch gekennzeichnet,
daß im Bereich der Ansaugöffnung (14) für die Raumluft für die Luftstrombildung ein Feuchtefühler (40) zum Erfassen der Raumluftfeuchte und für eine entsprechende Einstellung der Flüssigkeitszufuhr für die Nebelbildung aus dem Meerwasservorrat im Gehäuse (1, 2) angeordnet ist.

10. Gerät nach einem der Ansprüche 1 bis 9, dadurch gekennzeichnet,
daß an der Ansaugöffnung (14) für die Raumluft ein Filter (15) zum Zurückhalten von Schwebstoffen vorgesehen ist.

11. Gerät nach einem der Ansprüche 1 bis 10, dadurch gekennzeichnet,
daß als Luftaustritt eine schwenkbare Klappe (4) mit quer zum Luftstrom liegender Schwenkachse vorgesehen ist, deren Schwenkbewegung einen Hauptschalter (39) für das Gerät betätigt.

12. Gerät nach einem der Ansprüche 1 bis 11, dadurch gekennzeichnet,
daß im Wirkungsbereich der Sprüheinrichtung (11) und vor dem Rücklauf für aus dem Nebel abtropfende Flüssigkeit zum Meerwasservorrat im Gehäuse (1, 2) ein Träger (5) für feste Heilwirkstoffe zu deren Einbringung in die nebelbildende Flüssigkeit angeordnet ist.

13. Gerät nach einem der Ansprüche 1 bis 12, dadurch gekennzeichnet,
daß in Verbindung mit dem Meerwasservorrat im Gehäuse (1, 2) ein Pegelfühler (38) vorgesehen ist, der einen unteren und einen oberen Grenzwert für den Flüssigkeitsstand im Betrieb festlegt.

14. Gerät nach einem der Ansprüche 1 bis 13, dadurch gekennzeichnet,
daß auf dem Rücklaufweg der aus dem Nebel abtropfenden Überschußflüssigkeit vor dem Meerwasservorrat im Gehäuse (1, 2) ein Filter (47) aus einem porösen Traggerüst angeordnet ist, das mindestens an seiner mit Flüssigkeit in Berührung kommenden Oberfläche eine zusammenhängende Edelmetallschicht aufweist.

15. Gerät nach Anspruch 14, dadurch gekennzeichnet,
daß das Filter (47) unterhalb des Meerwasservorrats im Unterteil (2) des Gehäuses (1, 2) angeordnet ist und sich über den gesamten Gehäuseboden erstreckt.

16. Gerät nach Anspruch 15, dadurch gekennzeichnet,
daß das Filter (47) vom Meerwasservorrat durch eine herausnehmbare Abdeckplatte (46) getrennt ist, die nahe ihrem einen Ende mit einem Einlauftrichter (49) für aus dem Nebel abtropfende Überschußflüssigkeit versehen ist und nahe ihrem anderen Ende ein Durchströmgitter (48) als Verbindung zum Meerwasservorrat aufweist.

17. Gerät nach Anspruch 16, dadurch gekennzeichnet,
daß der Einlauftrichter (49) die alleinige Verlängerung einer trichterförmigen Öffnung (12) für die Rückführung der Überschußflüssigkeit zum Meerwasservorrat bildet.

18. Gerät nach einem der Ansprüche 14 bis 17, dadurch gekennzeichnet,
daß das Filter (47) eine insbesondere elektrolytisch aufgebrachte Oberflächenschicht aus Gold, aus einem Metall der Platingruppe oder aus einer Legierung dieser Edelmetalle aufweist.

**Claims**

1. Curative climate apparatus for room air processing, with which in and respectively on a housing comprising openings for air intake and air blow-off there are provided
   - a blower (8) for taking in external air so as to produce an air flow,
   - heating and cooling means for adjusting the temperature of the air flow to a desired value,
   - at least one liquid supply,
   - means (16) for selectively introducing additional gas into the air flow
   - spraying means (11) for from the liquid supply producing a mist curtain across the path of the air flow through the housing,
   and
   - radiation means for generating UV radiation acting upon the air flow,
   characterised in

that at least one reservoir (7) contains sea-water as a liquid supply, that the radiation means comprise radiators (17, 18, 19) for generating the complete UV spectrum of the sunlight including UV-A, UV-B and UV-C radiation and
that the said radiators (17, 18, 19) are disposed within the housing (1, 2) in the region of the intake openings (14, 16) both for the room air forming the air flow and for the additional gas to be possibly mixed thereto and are disposed above the reservoir (7) such that the radiation generated thereby acts not only upon the air flow but also upon the sea-water supply.

2. Apparatus according to claim 1, characterised in
that the radiation means comprise three separated radiators (17, 18, 19) for UV-A, for UV-B and for UV-C radiation, the radiators (17, 18) for UV-A and for UV-B radiation as to their current supply being connected with each other but separated from the radiator (19) for UV-C radiation.

3. Apparatus according to one of the claims 1 and 2, characterised in
that the sea-water supply for producing the mist curtain is water from the deep sea (Biomaris).

4. Apparatus according to one of the claims 1 to 3, characterised in
that the sea-water supply in the housing (1, 2) is separated from the region of the formation of mist through the spraying means (11) by a covering (24) which at least in the region of the radiation means (17, 18, 19) is transparent for UV radiation.

5. Apparatus according to one of the claims 1 to 4, characterised in
that an intake for adding additional liquid for room air processing is opening into the sea-water supply in the housing (1, 2) at a place opposite to the radiation means (17, 18, 19).

6. Apparatus according to claim 5, characterised in
that the feeding for the additional liquid to the sea-water supply in the housing (1, 2) includes metering means (22, 25).

7. Apparatus according to one of the claims 1 to 6, characterised in
that the air flow adjacent to the action region of the radiation means (17, 18, 19) and the blower (8) traverses a combined heating and cooling means comprising Peltier elements (13) as active elements and followed by the action region of the spraying means (11).

8. Apparatus according to claim 7, characterised in
that on the path of the air flow adjacent to to the heating and cooling means (13) a temperature sensor (37) comprising a temperature adjuster (41) is provided for regulating the temperature of the air blown off to the environment to a constant value.

9. Apparatus according to one of the claims 1 to 8, characterised in
that a humidity sensor (40) for detecting the humidity of the room air and for adjusting the liquid feeding for the mist formation from the sea-water supply in the housing (1, 2) correspondingly is provided in the region of the intake opening (14) for the room air for forming the air flow.

10. Apparatus according to one of the claims 1 to 9, characterised in
that the intake opening (14) for the room air is provided with a filter (15) for retaining dust.

11. Apparatus according to one of the claims 1 to 10, characterised in
that the air outlet is a swivelling flap (4) having its swivel axis perpendicular to the air flow and through its swivel motion actuating the main switch (39) for the apparatus.

12. Apparatus according to one of the claims 1 to 11, characterised in
that a carrier (5) for solid curing agents to be introduced into the mist forming liquid is disposed in the action region of the spraying means (11) and before the runback of liquid falling from the mist to the sea-water supply in the housing (1, 2).

13. Apparatus according to one of the claims 1 to 12, characterised in
that in connection with the sea-water supply in the housing (1, 2) a level sensor (38) is provided which defines a lower and an upper limit for the operative liquid level.

14. Apparatus according to one of the claims 1 to 13, characterised in
that in the runback path of the surplus liquid falling from the mist before the sea-water supply in the housing (1, 2) a filter (47) is provided which consists of a porous carrier structure and at least on its surface in contact with liquid comprises a continuous layer of noble metal.

15. Apparatus according to claim 14, characterised in
that the filter (47) is disposed below the sea-water supply in the inferior portion (2) of the housing (1, 2) and extends over the whole housing bottom.

16. Apparatus according to claim 15, characterised in
that the filter (47) is separated from the sea-water supply by a removable cover plate (46) which near its one end is provided with a feeding hopper (49) for surplus liquid falling from the mist and near its other end comprises a flow-through grid (48) as connection to the sea-water supply.

17. Apparatus according to claim 16, characterised in
that the feeding hopper (49) forms the sole extension of a hopper-shaped opening (12) for returning the surplus liquid to the sea-water supply.

18. Apparatus according to one of the claims 14 to 17, characterised in
that the filter (47) comprises a surface layer which is deposited thereto particularly electrolytically and consists of gold, of a metal of the platinum group or of an alloy of these noble metals.

**Revendications**

1. Appareil de climatisation thérapeutique pour le conditionnement de l'air spatial, à quel dans et respectivement à une boîte ayant des orifices d'aspiration et d'échappement ils sont disposés
   - un ventilateur (8) aspirant de l'air extérieur pour produire un courant d'air,
   - des installations de chauffage et de refroidissement pour régler la température du courant d'air sur une value desirée,
   - au moins une réserve de liquide,
   - un dispositif (16) pour l'introduction selective du gaz additonnel dans le courant d'air,
   - un dispositif atomiseur (11) pour produire un rideau de brouillard à travers la voie du courant d'air passant la boîte de la réserve de liquide
     et
   - un dispositif irradiateur pour produire de la radiation UV agissant sur le courant d'air,
caractérisé en ce
qu' au moins un vase (7) contient de l'eau de mer comme la réserve de liquide,
que le dispositif irradiateur comporte des émetteurs (17, 18, 19) pour engendrer le spectre complet de la lumière du soleil y compris des radiations UV-A, UV-B et UV-C.
et
que ces émetteurs (17, 18, 19) sont disposés dans la boîte (1, 2) dans la région des orifices d'entrée (14, 16) non seulement pour l'air spatial formant le courant d'air mais encore pour le gaz additionnel peut-être mélangé avec celui et sont disposés au-dessus du vase (7) afin que la radiation engendrée par ceux-ci agisse non seulement sur le courant d'air mais encore sur la réserve de l'eau de mer.

2. Appareil selon la revendication 1, caracterisé en ce
que le dispositif irradiateur comporte trois émetteurs (17, 18, 19) séparés pour de la radiation UV-A, UV-B et UV-C, les émetteurs (17, 18) pour de la radiation UV-A et UV-B à l'égard de leur alimentation en courant étant connectés ensemble entre se et séparés du émetteur (19) pour de la radiation UV-C.

3. Appareil selon une des revendications 1 et 2, caracterisé en ce
que la réserve liquide pour la formation du brouillard est de l'eau de la profondeur de la mer (Biomaris).

4. Appareil selon une des revendications 1 à 3, caraacterisé en ce
que la réserve de l'eau de mer dans la boîte (1, 2) est séparée de la région de la formation du brouillard par le dispositif atomiseur (11) par une couverture (24) quelle au moins dans la région du dispositif irradiateur (17, 18, 19) est transparente pour de la radiation UV.

5. Appareil selon une des revendications 1 à 4, caracterisé en ce
qu'une entrée pour une addition de la liquide additionnelle pour le conditionnement de l'air spatial débouche dans la réserve de l'eau de mer dans la boîte (1, 2) à une position vis-à-vis du dispositif irradiateur (17, 18, 19).

6. Appareil selon la revendication 5, caracterisé en ce
qu'un dispositif doseur (22, 25) est disposé dans l'amenée pour la liquide additionnelle à la réserve de l'eau de mer dans la boîte (1, 2).

7. Appareil selon une des revendications 1 à 6, caractérisé en ce
que le courant d'air à la suite de la région d'action du dispositif iradiateur (17, 18, 19) et du ventilateur (8) traverse un dispositif combiné de chauffage et de refroidissement ayant des éléments Peltier (13) comme des éléments actifs à quel la région d'action du dispositif atomiseur (11) suit.

8. Appareil selon la revendication 7, caracterisé en ce
qu'un capteur de température (37) ayant un dispositif d'ajustage de température (41) pour un réglage de température sur une valeur constante à la sortie (4) de l'air dans les environs est disposé sur la voie du courant de l'air à la suite du dispositif de chauffage et de refroidissement (13).

9. Appareil selon une des revendications 1 à 8, caracterisé en ce
qu'un capteur d'humidité (40) pour détecter l'humidité de l'air spatial et pour un réglage correspondant de l'alimentaion de la liquide pour la formation du brouillard de la réserve de l'eau de mer dans la boîte (1, 2) est disposé dans la région d'orifice d'aspiration (14) pour l'air spatial pour la formation du courant d'air.

10. Appareil selon une des revendications 1 à 9, caracterisé en ce
qu'un filtre (15) pour retenir de la matière suspendue est disposée sur l'orifice d'aspiration (14) pour l'air spatial.

11. Appareil selon une des revendications 1 à 10, caracterisé en ce
que la sortie d'air est formée par une trappe (4) pivotante ayant un axe pivot transversal au courant d'air, dont le mouvement pivotant actionne le commutateur principal (39) de l'appareil.

12. Appareil selon une des revendications 1 à 11, caracterisé en ce
qu'un support (5) pour des médicaments solids à introduire dans la liquide formant le brouillard est disposé dans la région d'action du dispositif atomiseur (11) et devant le reflux de la liquide dégouttante du brouillard à la réserve de l'eau de mer.

13. Appareil selon une des revendications 1 à 12, caractérisé en ce
qu'un capteur de niveau (38) est disposé dans la boîte (1, 2) en connexion avec la réserve de l'eau de mer pour définir une limite inferieure et une limite superieur pour le niveau de la liquide dans l'opération.

14. Appareil selon une des revendications 1 à 13, caracterisé en ce qu' un filtre (47) à support poreux quel au moins sur sa surface en contact avec de la liquide comporte une couche continue à métal précieux est disposé sur la voie reflux de la liquide en surplus dégouttante du brouillard devant la réserve de l'eau de mer dans la boîte (1, 2).

15. Appareil selon la revendication 14, caracterisé en ce que le filtre (47) est disposé au-dessous de la réserve de l'eau de mer dans la partie inferieur (2) de la boîte (1, 2) et s'étend sur tous le fond de la boîte.

16. Appareil selon la revendication 15, caracterisé en ce que le filtre (47) est séparé de la réserve de l'eau de mer par une plaque de couverture (46) enlevable quelle près de l'une de ses extrémités comporte un cône d'entrée (49) pour de la liquide en surplus dégouttante du brouillard et près de l'autre de ses extrémités comporte un grillage de circulation (48) comme connexion avec la réserve de l'eau de mer.

17. Appareil selon la revendication 16, caracterisé en ce que le cône d'entrée (49) forme le seul prolongateur d'un orifice en entonnoir (12) pour le refluement de la liquide en surplus à la réserve de l'eau de mer.

18. Appareil selon une des revendications 14 à 17, caracterisé en ce que le filtre (47) comporte une couche de surface déposée particulièrement électrolytiquement d'or, d'en métal précieux ou d'en un alliage de ces métaux précieux.

EP 0 203 520 B1

_Fig. 1_

Fig. 2

*Fig. 3*

Fig. 4

## Fig. 5

EP 0 203 520 B1